Europäisches Patentamt

**European Patent Office**

**Office européen des brevets**

(11) Veröffentlichungsnummer: **0 438 772 A1**

# (12) EUROPÄISCHE PATENTANMELDUNG

(21) Anmeldenummer: 90125405.2

(22) Anmeldetag: **24.12.90**

(51) Int. Cl.5: **B01F 13/02**, B01J 2/10

(30) Priorität: **25.01.90 DE 4002099**

(43) Veröffentlichungstag der Anmeldung:
**31.07.91 Patentblatt 91/31**

(84) Benannte Vertragsstaaten:
**DE ES FR GB IT**

(71) Anmelder: **Draiswerke GmbH**
**Speckweg 43-59**
**W-6800 Mannheim 31(DE)**

(72) Erfinder: **Eirich, Paul**
**Bahnhofstrasse 11**
**W-6969 Hardheim(DE)**

(74) Vertreter: **Rau, Manfred, Dr. Dipl.-Ing. et al**
**Rau & Schneck, Patentanwälte Königstrasse**
**2**
**W-8500 Nürnberg 1(DE)**

(54) **Mischer.**

(57) Ein Mischer weist einen ortsfesten, im wesentlichen zylindrischen Behälter (1) auf, in dem ein Mischwerk (7) angeordnet ist und der mit einem Mischguteinlaß (15) und einem Mischgutauslaß (16) versehen ist und der in seinem Innenraum (22) ein Mischgutbett (34) aufnimmt. Um ein schnelles, gründliches aber trotzdem schonendes Mischen des Mischgutes zu ermöglichen, ist mindestens ein Teil des das Mischgutbett (34) aufnehmenden Bereichs des Behälters (1) mit mindestens einem Wandsegment (17) aus porösem gasdurchlässigem Material versehen, auf dessen dem Innenraum (22) abgewandter Seite eine Druckkammer (20) vorgesehen ist, in die mindestens ein Druckgas-Anschluß (21) einmündet. Hierdurch kann das Mischgutbett (34) fluidisiert werden.

FIG. 2

EP 0 438 772 A1

Die Erfindung betrifft einen Mischer nach dem Oberbegriff des Anspruches 1.

Derartige Mischer werden häufig für das Mischen und Pelletieren bzw. Granulieren von pulvrigen oder feinkörnigen Mischgütern eingesetzt. Die Mischwirkung beruht hierbei darauf, daß die Mischwerkzeuge ein im Behälter befindliches Mischgutbett durchpflügen, wobei die Differenzgeschwindigkeit zwischen Mischgut und Mischwerkzeug eine Verschiebung der einzelnen Mischgutteilchen gegeneinander zur Folge hat. Nachteilig hierbei ist, daß für die Erzielung einer ausreichenden Mischgüte in der Regel große Scherkräfte oder bei geringer Mischwerkzeuggeschwindigkeit große Mischzeiten erforderlich sind. Das Einbringen hoher Scherkräfte in das Mischgut bedingt einen hohen Energieaufwand und eine entsprechend schwere Bauweise des Mischers und dessen Antriebs. Große Scherkräfte führen weiterhin zu einer in der Regel unerwünschten Zerstörung von körnigen Mischgutbestandteilen. Durch das konstruktiv notwendige Spiel zwischen den Mischwerkzeugen und der Innenwand des Behälters ergeben sich Mischgutverpressungen, die auch zu Anbackungen des Mischgutes an der Innenwand des Behälters führen können. Wenn am Ende eines Mischvorganges - bei chargenweisem Betrieb des Mischers - eine vollständige Entleerung des Behälters gewünscht wird, so kann dies zu Schwierigkeiten und insbesondere zu langen Entleerungszeiten führen.

Der Erfindung liegt die Aufgabe zugrunde, einen Mischer der gattungsgemäßen Art zu schaffen, der ein schnelles, gründliches aber schonendes Mischen des Mischgutes ermöglicht.

Diese Aufgabe wird erfindungsgemäß durch die Merkmale im Kennzeichnungsteil des Anspruches 1 gelöst. Das Druckgas strömt aus der Druckkammer vollkommen gleichmäßig durch das Wandsegment in den Innenraum des Behälters und führt so zu einer gleichmäßigen Fluidisierung des Mischgutes, vorausgesetzt, daß es sich um ein fluidisierbares Mischgut handelt. Durch das Fluidisieren wird die Reibung zwischen dem Mischgut und der Innenwand des Behälters auf ein Minimum reduziert. Die Mischwerkzeuge können das Mischgut durchpflügen, ohne nennenswerte Scherkräfte auszuüben. Die Verschiebung der einzelnen Mischgutpartikelchen zueinander kann mit sehr geringem Kraft- und damit mit sehr geringem Energieaufwand durchgeführt werden. Die Erwärmung des Mischgutes wird auf ein Minimum reduziert, so daß in vielen Fällen auch eine Kühlung nicht erforderlich ist. Es kommt hinzu, daß das Fluidisiermedium in vielen Fällen als Kühlmittel wirkt. Mischgutpartikel werden nicht zerstört. Der Verschleiß der Mischwerkzeuge wird stark verringert. Mischgutverdichtungen im Wandbereich werden vermieden. Wenn erwärmtes Gas zugeführt wird, kann gleichzeitig eine gegebenenfalls erwünschte Trocknung des Mischgutes erfolgen. Wenn dies zur Erreichung oder zur Vermeidung von Reaktionen notwendig ist, kann als Druckgas Inertgas eingesetzt werden, andernfalls wird in den meisten Fällen Luft zugeführt. In der Regel wird das mindestens eine Wandsegment sich entsprechend Anspruch 2 über die volle Länge des Innenraums des Behälters erstrecken, um die gewünschten Effekte an allen Stellen eintreten zu lassen.

Durch die Weiterbildung nach Anspruch 3 wird sichergestellt, daß das mindestens eine Wandsegment alle auftretenden Kräfte aufnehmen kann.

Durch die Drehbewegung der Mischwerkzeuge wird das Mischgutbett in Drehrichtung versetzt. Entsprechend der Weiterbildung der Erfindung nach Anspruch 4 wird auch das mindestens eine Wandsegment entsprechend versetzt, so daß das Mischgutbett sich voll umfänglich auf dem porösen Wandsegment befindet, dieses aber nicht wesentlich über die Oberfläche des Mischgutbettes hinausragt. Durch dieses Versetzen des mindestens einen porösen Wandsegments in Drehrichtung des bzw. der Mischwerkzeuge ist sichergestellt, daß eine Auflockerung des Mischgutes im Bereich der größten Verdichtungswirkung der Mischwerkzeuge stattfindet, die in Drehrichtung der Mischwerkzeuge gesehen hinter dem tiefsten Bereich des Mahlraumes liegt.

In der Regel ist das mindestens eine Wandsegment entsprechend Anspruch 5 ausgebildet.

Durch die Weiterbildung nach Anspruch 6 wird erreicht, daß das fluidisierte Mischgutbett gleichzeitig einer lediglich durch die Neigung des mindestens einen Wandsegments bedingten Förderbewegung unterworfen wird. Diese kann entsprechend Anspruch 7 zum Mischgutauslaß gerichtet sein, was insbesondere bei chargenweise arbeitenden Mischern von Bedeutung ist. Diese kann entsprechend Anspruch 8 aber auch entgegen der Förderrichtung, also vom Mischgutauslaß weg zum Mischguteinlaß hin gerichtet sein, was insbesondere bei kontinuierlich betreibbaren Mischern von Vorteil ist, wie es im Anspruch 8 angegeben ist. Wenn kontinuierlich betreibbare Mischer - in Förderrichtung gesehen - hinter einer Einzugszone eine Flüssigkeitszugabeeinrichtung aufweisen, dann kann es von Vorteil sein, wenn das mindestens eine poröse Wandsegment in der Einzugszone angeordnet ist, wo das Mischgut noch trocken ist.

Wenn der Mischer eine große untere Auslaßöffnung mit mindestens einer Auslaßklappe aufweist, dann ist die Ausgestaltung nach Anspruch 9 und gegebenenfalls Anspruch 10 von Vorteil. Hierbei kann während des Entleervorganges die Auslaßklappe nur teilweise geöffnet werden, so daß das Mischgut über die Auslaßklappe in fluidisiertem Zustand langsam ausläuft, wobei insbesondere das Mischwerk nicht zu Hilfe genommen wird. Zur Restentleerung wird dann die mindestens eine Auslaßklappe vollständig geöffnet.

Wenn dem Mischgut Flüssigkeit zugesetzt werden soll, dann ist die Weiterbildung nach Anspruch 10 von großem Vorteil. Hierdurch wird vermieden, daß trotz des Umlaufens der Düse Flüssigkeit gegen die Innenwand des Behälters in einem Bereich gesprüht wird, in dem sich kein Mischgut befindet. Hierdurch wird außerdem vermieden, daß Feuchtigkeit auf das poröse Wandsegment gelangt. An diesem würde wegen der porösen Oberflächenbeschaffenheit Mischgut besonders leicht anbacken. Dies wird vermieden.

Weitere Vorteile und Merkmale der Erfindung ergeben sich aus der nachfolgenden Beschreibung mehrerer Ausführungsbeispiele der Erfindung anhand der Zeichnung.

Es zeigt

Fig. 1 einen chargenweise betreibbaren Mischer in vertikalem Längsschnitt,

Fig. 2 einen vertikalen Querschnitt durch den Mischer nach Fig. 1,

Fig. 3 einen vertikalen Teil-Längsschnitt durch einen zweiten gegenüber Fig. 1 abgewandelten Mischer,

Fig. 4 einen vertikalen Teil-Längsschnitt durch einen dritten gegenüber Fig. 1 abgewandelten Mischer,

Fig. 5 einen vertikalen Teil-Längsschnitt durch einen Mischer mit großen Mischgut-Auslaßklappen im Bodenbereich,

Fig. 6 einen vertikalen Querschnitt durch den Mischer nach Fig. 5,

Fig. 7 einen vertikalen Teil-Qurschnitt durch einen Mischer in gegenüber Fig. 5 und 6 leicht abgewandelter Ausführungsform,

Fig. 8 einen vertikalen Längsschnitt durch einen kontinuierlich betreibbaren Mischer und

Fig. 9 einen vertikalen Teil-Längsschnitt durch einen gegenüber Fig. 8 leicht abgewandelten kontinuierlich betreibbaren Mischer.

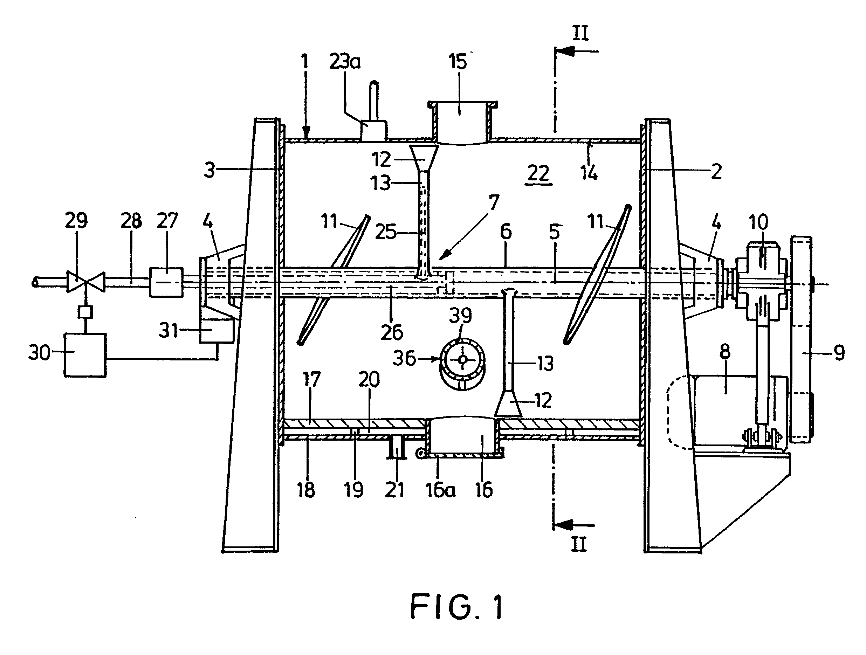

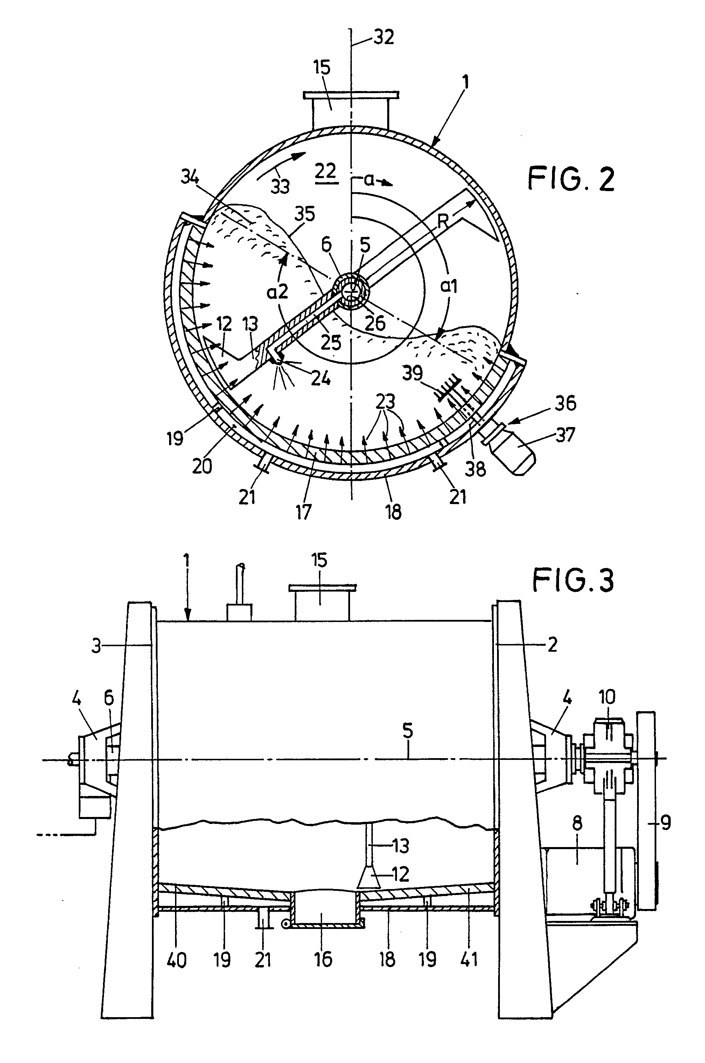

Der in den Fig. 1 und 2 dargestellte chargenweise betreibbare Mischer weist einen horizontalen, stationären, zylindrischen Behälter 1 auf, der von gleichzeitig als Ständer dienenden Seitenwänden 2,3 stirnseitig abgeschlossen und gleichzeitig gehalten wird. An den Seitenwänden 2,3 sind Lagerböcke 4 befestigt, in denen eine konzentrisch zur Mittel-Längs-Achse 5 des Behälters 1 angeordnete Welle 6 eines Mischwerks 7 gelagert ist. Sie wird von einem Antriebsmotor 8 über einen Keilriementrieb 9 und ein Getriebe 10 angetrieben. Das Mischwerk 7 weist schaufelartige Mischwerkzeuge

11 und/oder pflugschartige Mischwerkzeuge 12 auf, die mittels an der Welle 6 angebrachter und radial von dieser abstehender Mischwerkzeug-Träger 13 gehalten werden. Die Mischwerkzeuge 11 bzw. 12 selber befinden sich in der Nähe der Innenwand 14 des Behälters 1.

Auf der Oberseite des Behälters 1 ist ein Mischguteinlaß 15 angeordnet; an der Unterseite ist ein Mischgutauslaß 16 vorgesehen, der mittels eines Deckels 16a verschließbar ist.

Ein Teil der zylindrischen Innenwand 14 des Behälters 1 wird durch ein Wandsegment 17 aus einem porösen gasdurchlässigen Material gebildet. Dieses teilzylindrische Wandsegment 17 stützt sich gegen einen ebenfalls teilzylindrischen Außenwandabschnitt 18 ab, und zwar über Abstandshalter 19. Zwischen dem Wandsegment 17 und dem Außenwandabschnitt 18, also in dem Bereich, der von den Abstandshaltern 19 überbrückt wird, ist eine Druckkammer 20 ausgebildet, in die von außen mindestens ein Druckgas-Anschluß 21 einmündet, durch den Druckgas in die Druckkammer 20 eingeführt wird, das durch das poröse Wandsegment 17 hindurch in den Innenraum 22 des Behälters 1 strömt, wobei durch die zahlreichen Strömungsrichtungspfeile 23 angedeutet ist, daß das Gas über die volle Fläche des Wandsegmentes 17 in den Innenraum 22 strömt. An der Oberseite des Behälters 1 ist ein Gas-Abzug 23a vorgesehen.

An einem Mischwerkzeug-Träger 13 ist eine Flüssigkeitszuführ-Düse 24 angebracht, die über ein Flüssigkeitszuführ-Rohr 25 am bzw. im Träger 13 mit einem Flüssigkeits-Rohr 26 verbunden ist, das konzentrisch zur Achse 5 in der hohl ausgebildeten Welle 6 angeordnet ist. Dieses Rohr ist vor einem Lagerbock 4 über eine Rohrkupplung 27 mit einer Flüssigkeitszuführ-Leitung 28 verbunden, in der ein Steuer-Ventil 29 angeordnet ist. Dieses Steuer-Ventil 29 wird von einer Steuereinheit 30 angesteuert. Diese Steuereinheit 30 erhält als Eingang von einem mit der Welle 6 gekuppelten Drehstellungsgeber 31 Drehstellungssignale, die die Winkel-Lage der Düse 24 relativ zum Behälter 1 angeben. Ausgegangen wird hierbei der Einfachheit halber von einer Vertikalen 32 durch die Achse 5, die also in Fig. 2 mittig durch den Mischguteinlaß 15 geht. Der Drehwinkel a wird hierbei in Drehrichtung 33 des Mischwerks 7 gemessen, der in Fig. 2 im Uhrzeigersinn dargestellt ist. Da die Mischwerkzeuge 11 bzw. 12 beim Mischen das Mischgut in Drehrichtung 33 mitnehmen, stellt sich ein Mischgutbett 34 ein, das dort, wo die Mischwerkzeuge 11 bzw. 12 nach unten laufen, seinen tiefsten Bereich und dort, wo die Mischwerkzeuge 11 bzw. 12 nach oben laufen, seinen höchsten Bereich hat. Es weist also eine geneigte Oberfläche 35 auf, wobei die unregelmäßige Neigung dieser Oberfläche 35 von der Art des Mischgutes, der Ausgestaltung der Mischwerkzeuge 11 bzw. 12 und deren Drehzahl abhängt. Die Anordnung des porösen Wandsegmentes 17 ist in gleicher Weise geneigt und soll etwa derart sein, daß es sich über den vollen Bereich des geneigten Mischgutbettes 34 erstreckt. Gemäß der Darstellung in Fig. 2 erstreckt es sich etwa über einen Umfangsbereich von 180°, wobei der Winkel a1 von der Vertikalen 32 in Drehrichtung 33 bis zum unteren Beginn des Mischgutbettes 34 etwa 120° beträgt. In diesem Bereich beginnt etwa auch das Wandsegment 17. Der Winkel a2 von der Vertikalen 32 in Drehrichtung 33 bis zum oberen Bereich des Mischgutbettes beträgt etwa 300°. Dieser Bereich fällt ebenfalls mit dem oberen Ende des Wandsegmentes 17 zusammen. Diese Drehwinkel a1 und a2 werden in der Steuereinheit 30 zu Steuersignalen verarbeitet, die - mit einer kurzen Verzögerung - beim Drehwinkel a1 das Ventil 29 öffnen und - gegebenenfalls ebenfalls mit einer kurzen Verzögerung - beim Drehwinkel a2 das Ventil 29 schließen. Hierdurch wird sichergestellt, daß Flüssigkeit nur in bzw. auf das Mischgutbett 34 gesprüht wird. Die erwähnte kurzzeitige Verzögerung dient dazu, sicherzustellen, daß nicht beim Eintritt des Mischwerkzeuges 11 bzw. 12 in das Mischgutbett 34 bzw. beim Austritt Flüssigkeit in den nicht mit Mischgut gefüllten Teil des Innenraums 22 des Behälters 1 gesprüht wird.

Der Mischer wird chargenweise als sogenannter Schubmischer oder als Turbulent-Mischer betrieben. Wenn er als Schubmischer betrieben wird, dann werden die Mischwerkzeuge 11 bzw. 12 mit unterkritischer Drehzahl angetrieben, so daß sie die einzelnen Mischgutpartikel im Mischgutbett 34 nur gegeneinander verschieben. Wenn der Mischer als Turbulent-Mischer betrieben wird, dann wird er als sogenannter Wurfmischer betrieben, wobei einzelne Mischgutpartikel aus dem Mischgutbett 34 herausgerissen werden und auf einer parabelförmigen Wurfbahn wieder in das Mischgutbett 34 gelangen. Wenn die Mischwerkzeuge 11,12 zum Betrieb als Schubmischer unterkritisch angetrieben werden, dann gilt für die dimensionslose Froude-Kennzahl Fr<1, während bei überkritischer Drehzahl bzw. Umfangsgeschwindigkeit gilt 2<Fr<6.

Die Froude-Kennzahl ist definiert als

$$Fr = W^2 : R \times g,$$

wobei gilt

> W = Umfangsgeschwindigkeit der radial äußeren Enden der Mischwerkzeuge 11 bzw. 12 in m/s,
> R = Radius des Mischwerks 7 in m
> g = Erdbeschleunigung in m/s².

Wenn der Mischer als sogenannter Ringmischer angetrieben wird, bei dem das Mischgut in Form eines Mischgutringes über den gesamten Umfang der Innenwand des Behälters an letzterer anliegt, dann gilt für die Froude-Kennzahl 20<Fr<60.

Am Behälter 1 ist weiterhin ein als Mischhilfe dienender Zerkleinerer 36 vorgesehen. Dieser weist in üblicher Weise einen außen am Behälter 1 bzw. dessen Außenwandabschnitt 18 angeflanschten Motor 37 auf, dessen Welle 38 die Druckkammer 20 und das Wandsegment 17 durchsetzt und an ihrem im Innenraum 22 befindlichen Ende mit einem hochtourig rotierenden Zerkleinerungskopf 39 versehen ist. Hierbei kann es sich um ein Schlag-Messerkreuz oder eine Stiftmühle handeln, wie sie aus der DE- 35 15 318 A1 (entsprechend US-PS 4 848 919) bekannt ist. Dieser Zerkleinerungskopf 39 zerschlägt Agglomerate des Mischgutes und erzeugt intensive Mischgutströmungen. Bei dem Ausführungsbeispiel nach den Fig. 1 und 2 ist das Wandsegment 17 - wie bereits erläutert - teilzylindrisch ausgebildet. Es weist also parallel zur Achse 5 verlaufende Mantellinien auf. Bei horizontaler Anordnung des Behälters 1 weist das Wandsegment 17 also kein Gefälle zum Mischgutauslaß 16 auf. Ein Fördereffekt wird also nur durch die Mischwerkzeuge 11 bzw. 12 erreicht. Dies gilt auch für das Entleeren des Behälters 1 durch den Mischgutauslaß 16.

Das während eines Mischvorgangs durch das Wandsegment 17 in den Innenraum 22 gedrückte Gas, bei dem es sich in vielen Anwendungsfällen um Luft handeln kann, lockert das Mischgutbett 34 im unmittelbaren Bereich des Wandsegmentes 17 auf und unterbindet somit Mischgutverdichtungen durch die Mischwerkzeuge 11 bzw. 12 im Bereich der Wand des Behälters 1. Je nach Menge und Druck bzw. Geschwindigkeit des Gases wird das Mischgutbett 34 insgesamt in einen Fließzustand versetzt, d.h. es kommt in einen Zustand wie ein Wirbelbett. Auch bei der geschilderten teilzylindrischen Ausgestaltung des Wandsegments 17 ist dieser Fließzustand zumindest im Nachbarbereich des Wandsegmentes 17 einer schnellen und vollständigen Entleerung des Behälters 1 beim Öffnen des Mischgutauslasses 16 sehr förderlich.

Soweit bei den nachfolgend beschriebenen Ausführungsbeispielen mit den Fig. 1 und 2 identische Teile vorhanden sind, werden dieselben Bezugsziffern verwendet. Soweit funktionell gleiche, konstruktiv aber geringfügig andere Teile vorgesehen sind, werden diese mit derselben Bezugsziffer bezeichnet, die mit einem oder mehreren hochgesetzten Strichen abgewandelt ist. In allen Fällen bedarf es nicht einer vollständigen Neubeschreibung, es wird vielmehr insoweit auf die vorhergehende Beschreibung verwiesen.

Der Mischer nach Fig. 3 unterscheidet sich im wesentlichen von dem Mischer nach den Fig. 1 und 2 dadurch, daß zwei Wandsegmente 40,41 vorgesehen sind, die gegenüber der Mittel-Längs-Achse 5 des Behälters 1 zum Mischgutauslaß 16 geneigt verlaufen. Hierdurch wird zum einen der Austrag des fluidisierten Mischguts aus dem Behälter 1 verbessert. Zum anderen kann hierdurch eine axiale Umwälzung des fluidisierten Mischgutes während des Mischvorganges erzeugt bzw. noch verbessert werden.

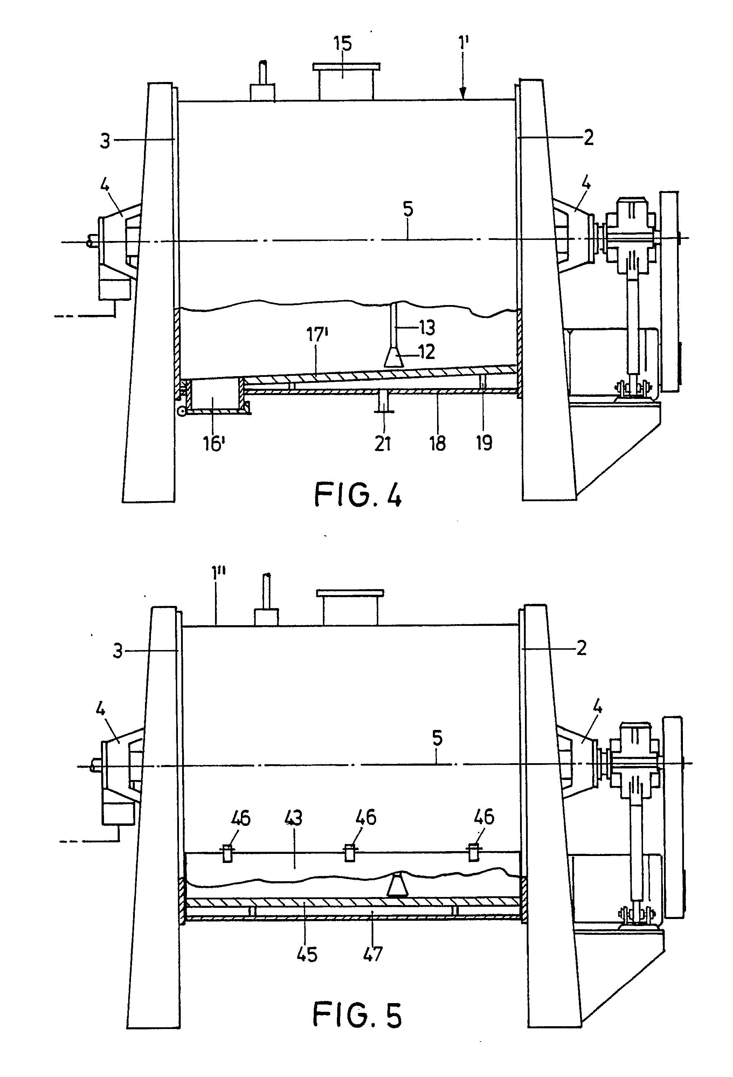

Der Mischer nach Fig. 4 ist ebenfalls weitestgehend identisch mit dem nach den Fig. 1 und 2, so daß er ebenfalls nur im Teil-Längsschnitt dargestellt ist. Er unterscheidet sich im wesentlichen von dem Mischer nach den Fig. 1 und 2 dadurch, daß ein Mischgutauslaß 16' an einem Ende des Behälters 1', also in der Nähe der Seitenwand 3 angeordnet ist und das Wandsegment 17' durchgehend geneigt zum Mischgutauslaß 16' hin verlängert, d.h. der Abstand zur Achse 5 vergrößert sich.

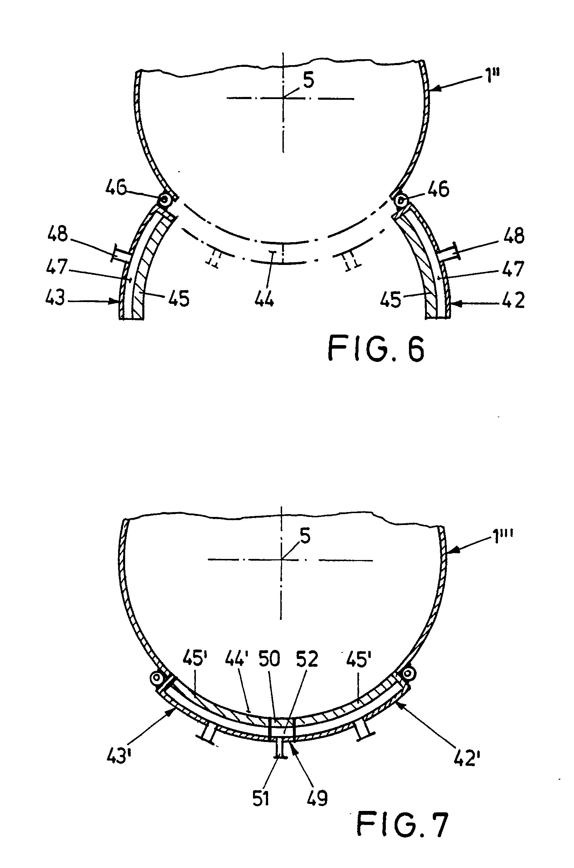

Das Ausführungsbeispiel nach den Fig. 5 und 6 unterscheidet sich dadurch von dem Ausführungsbeispiel nach den Fig. 1 und 2, daß der Behälter 1'' sich über seine volle Länge erstreckende teilzylindrische Mischgut-Auslaßklappen 42,43 aufweist, die sich jeweils etwa über 1/6 des Umfangs des Behälters 1'' erstrecken. In geöffnetem Zustand geben diese Auslaßklappen 42,43 eine Mischgut-Auslaßöffnung 44 frei, die sich über 1/3 des Umfangs des Behälters 1'' und damit über einen sehr großen Teil des in der Horizontalebene der Achse 5 liegenden Querschnitts des Behälters 1'' erstreckt.

Eine solche große Auslaßöffnung 44 ermöglicht eine problemlose vollständige Entleerung des Behälters 1''. An den Auslaßklappen 42,43 sind teilzylindrische Wandsegmente 45 aus dem erwähnten gasdurchlässigen porösen Material angebracht. Die außenliegenden, mittels Gelenken 46 am Behälters 1'' angebrachten Auslaßklappen 42,43 begrenzen zwischen sich und dem jeweiligen Wandsegment 45 eine Druckkammer 47, in die jeweils von außen ein Druckgas-Anschluß 48 einmündet. Zum Zwecke einer langsamen gleichmäßigen Entleerung können die Auslaßklappen 42,43 nur teilweise geöffnet werden, so daß das fluidisierte Mischgut über die nach wie vor mit Druckgas beaufschlagten Wandsegmente 45 wie über eine Förderrinne ausfließt. Zur Restentleerung erfolgt dann eine vollständige Öffnung der Auslaßklappen 42,43 in die in Fig. 6 dargestellte Stellung.

Die Ausführungsform nach Fig. 7 unterscheidet sich von der nach den Fig. 5 und 6 nur dadurch, daß zwischen zwei eine große Mischgut-Auslaßöffnung 44' begrenzenden Mischgut-Auslaßklappen 42',43', an denen in gleicher Weise Wandsegmente 45' angebracht sind, ein Mittelsteg 49 angebracht ist, auf dem ebenfalls ein Wandsegment 50 ausgebildet ist. Dieser Mittelsteg 49 weist ebenfalls einen Druckgas-Anschluß 51 auf, der in eine Druckkammer 52 des Mittelstegs 49 einmündet.

Sowohl bei dem Ausführungsbeispiel nach den Fig. 5 und 6 als auch bei dem Ausführungsbeispiel nach Fig. 7 kann selbstverständlich auch noch am Behälter 1''' selber ein poröses Wandsegment wie bei der Ausführungsform nach den Fig. 1 und 2 vorhanden sein.

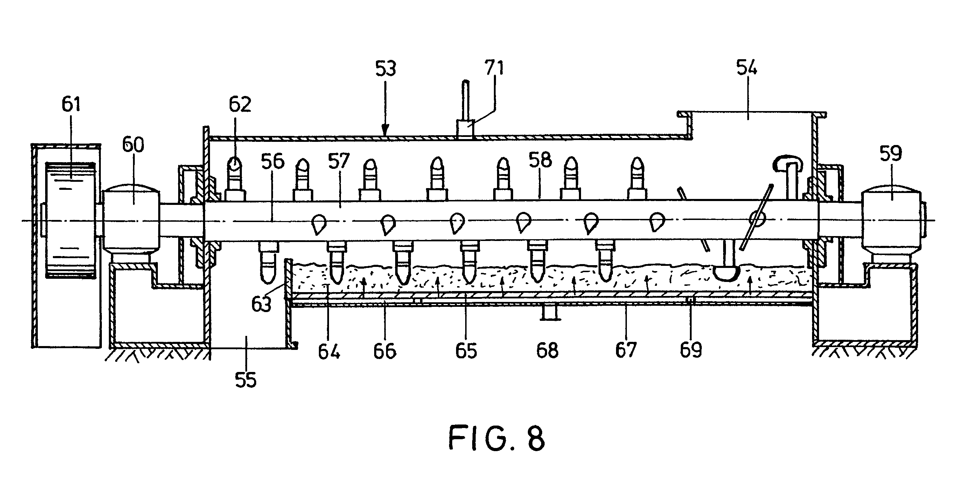

Wie Fig. 8 entnehmbar ist, können poröse Wandsegmente nicht nur in chargenweise zu betreibenden Mischern, sondern auch in kontinuierlichen Mischern eingesetzt werden. Ein solcher kontinuierlicher Mischer weist einen relativ langgestreckten zylindrischen Behälter 53 auf, an dessen einem Ende ein oberer Mischguteinlaß 54 und an dessen anderem Ende ein unterer Mischgutauslaß 55 ausgebildet sind. Konzentrisch zur Mittel-Längs-Achse 56 ist eine Welle 57 eines Mischwerks 58 gelagert, die in endseitigen Lagern 59,60 gelagert ist. Zum Antrieb ist auf der Welle eine Riemenscheibe 61 angebracht. An der Welle 57 sind Mischwerkzeuge 62 angebracht. Vor dem Mischgutauslaß 55 ist eine Rückstaueinrichtung 63 in Form eines sogenannten Wehres vorgesehen. Mit dieser Rückstaueinrichtung 63 wird ein bestimmter Füllungsgrad des Behälters 53, d.h. die Höhe eines Mischgutbettes 64 im Behälter 53 eingestellt.

Zumindest der Bodenbereich des Behälters 53 weist - ähnlich wie bei dem Ausführungsbeispiel nach den Fig. 1 und 2 - ein poröses Wandsegment 65 auf, das eine Druckkammer 66 begrenzt, die nach außen durch einen zylindrischen Außen-Wandabschnitt 67 begrenzt wird. In die Druckkammer 66 mündet ein Druckgas-Anschluß 68 ein. Auch hier sind zwischen Wandsegment 65 und Außen-Wandabschnitt 67 Abstandshalter 69 vorgesehen. Bei der Ausgestaltung nach Fig. 8 ist das Wandsegment 65 teilzylindrisch ausgebildet und konzentrisch zur Achse 56 angeordnet.

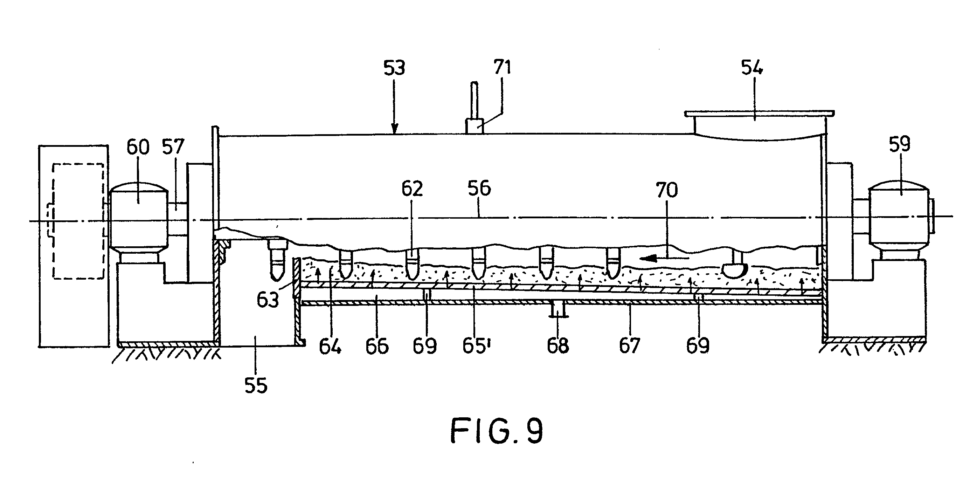

Bei der geringfügig abgewandelten Ausführungsform nach Fig. 9 steigt das Wandsegment 65' vom Mischguteinlaß 54 in Förderrichtung 70 zum Mischgutauslaß 55 hin an, d.h. es nähert sich der Achse 56. Hierdurch wird eine Rückströmung oder Verzögerung des Mischgutes bezogen auf die Förderrichtung erreicht. Auf dem Behälter 53 ist ein Gas-Abzug 71 vorgesehen.

Gerade bei kontinuierlich arbeitenden Mischern, wie sie in den Fig. 8 und 9 dargestellt sind, kann es zweckmäßig sein, Wandsegmente aus porösem, gasdurchlässigem Material nur in dem Bereich vorzusehen, in dem das Mischgut noch nicht mit Flüssigkeit beaufschlagt wird bzw. ist, wodurch Anbackungen von Flüssigkeit bzw. feuchtem Mischgut an dem porösen Material vermieden werden. Gerade bei derartigen kontinuierlichen Mischern würde sich also dann ein solches Wandsegment nur über einen bestimmten Bereich vom Mischguteinlaß 54 in Förderrichtung erstrecken.

Bei dem porösen, gasdurchlässigen Material für die Wandsegmente kann es sich um Sintermetalle, Sinterkeramiken oder auch gesinterte Kunststoffe, beispielsweise gesintertes Polytetrafluorethylen (PTFE) handeln.

**Patentansprüche**

1. Mischer mit einem ortsfesten, im wesentlichen zylindrischen Behälter (1,1',1'',53), in dem ein um seine Mittel-Längs-Achse (5,56) drehantreibbares Mischwerk (7,58) angeordnet ist, der mit einem Mischguteinlaß (15,54) und einem Mischgutauslaß (16,16',44,44',55) versehen ist und der in seinem Innenraum (22) ein Mischgutbett (34,64) aufnimmt, dadurch gekennzeichnet, daß mindestens ein Teil des ein Mischgutbett (34,64) aufnehmenden Bereichs des Behälters (1,1',1'',53) mit mindestens einem Wandsegment (17,17',40,41,45,45',50,65,65') aus porösem gasdurchlässigem Material versehen ist, auf dessen dem Innenraum (22) abgewandter Seite eine Druckkammer (20,47,52,66) vorgesehen ist, in die mindestens ein Druckgas-Anschluß (21,48,51,68) einmündet.

2. Mischer nach Anspruch 1, dadurch gekennzeichnet, daß das mindestens eine Wandsegment (17,17',40,41,45, 45',50,65,65') sich im wesentlichen über die volle Länge des Innenraums (22) des Behälters (1,1',1'',53) erstreckt.

3. Mischer nach Anspruch 1, dadurch gekennzeichnet, daß das mindestens eine Wandsegment (17,17',40,41,45, 45',50,65,65') sich über Abstandshalter (19,69) gegenüber einem Außen-Wandabschnitt (18,67) abstützt, wobei die Druckkammer (20,47,52,66) zwischen dem Wandsegment (17,17',40,41,45,45'50,65,65') und dem Außen-Wandabschnitt (18,67) begrenzt ist.

4. Mischer nach Anspruch 1, dadurch gekennzeichnet, daß das mindestens eine Wandsegment (17,17')) bezogen auf eine Vertikale (32) durch die Mittel-Längs-Achse (5) in Drehrichtung (33) des Mischwerks (7) versetzt angeordnet ist.

5. Mischer nach Anspruch 1, dadurch gekennzeichnet, daß das mindestens eine Wandsegment (17,17',40,41,45, 45',50,65,65') teilzylindrisch ausgebildet ist.

6. Mischer nach Anspruch 1, dadurch gekennzeichnet, daß mindestens eine Wandsegment (17',40,41,65') relativ zur Mittel-Längs-Achse (5,56) geneigt angeordnet ist.

7. Mischer nach Anspruch 6, dadurch gekennzeichnet, daß der Mischer als chargenweise betreibbarer Mischer mit einem verschließbaren Mischgutauslaß (16,16') ausgebildet ist und daß das mindestens eine Wandsegment (17',40,41) zum Mischgutauslaß (16,16') hin geneigt verläuft.

8. Mischer nach Anspruch 6, dadurch gekennzeichnet, daß der Mischer kontinuierlich betreibbar und mit einem Mischguteinlaß (54) an einem Ende und einem Mischgutauslaß (55) am anderen Ende ausgebildet ist und daß das mindestens eine Wandsegment (65') zum Mischgutauslaß (55) hin zur Mittel-Längs-Achse (56) hin ansteigt.

9. Mischer nach Anspruch 1, dadurch gekennzeichnet, daß er mindestens eine eine Mischgut-Auslaßöffnung (44,44') verschließende, teilzylindrische Mischgut-Auslaßklappe (42,43,42',43') aufweist, die mit einem Wandsegment (45,45') aus porösem Material und einer Druckkammer (47,47') mit einem Druckgas-Anschluß (48) versehen ist.

10. Mischer nach Anspruch 1, dadurch gekennzeichnet, daß mindestens ein Mischwerkzeug (11 bzw. 12) des Mischwerks (7) mit einer Flüssigkeitszuführ-Düse (24) versehen ist und daß in einer zu dieser Düse (24) führenden Flüssigkeitszuführleitung (28) ein Steuer-Ventil (29) angeordnet ist, das von einer Steuereinheit (30) in der Weise geöffnet bzw. geschlossen wird, daß Flüssigkeit nur in Richtung auf das mindestens eine Wandsegment (17) aus porösem Material gesprüht wird.

FIG. 1

FIG. 2

FIG.3

FIG. 4

FIG. 5

FIG. 6

FIG. 7

FIG. 8

EP 0 438 772 A1

FIG.9

EP 0 438 772 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-7 103 06 (AMALGAMATED LIMESTONE CORP., LTD) <br> * Seite 3, Zeile 56 - Seite 4, Zeile 41; Abbildungen 1,2 * <br> – – – | 1,2,5 | B 01 F 13/02 <br> B 01 J 2/10 |
| A | EP-A-0 151 782 (Dr. G. GERGELY) <br> – – – | | |
| A | FR-A-1 603 724 (Dr. R. MAAG AG et SOCIETE DITE: PECHINEY-PROGIL) <br> – – – – – | | |

|  |
|---|
| RECHERCHIERTE SACHGEBIETE (Int. Cl.5) |
| B 01 J <br> B 01 F |

Der vorliegende Recherchenbericht wurde für alle Patentansprüche erstellt

| Recherchenort | Abschlußdatum der Recherche | Prüfer |
|---|---|---|
| Den Haag | 26 April 91 | PYFFEROEN K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------
& : Mitglied der gleichen Patentfamilie, übereinstimmendes Dokument